# EUROPÄISCHE PATENTSCHRIFT

(11) **EP 2 552 643 B1**
(45) Veröffentlichungstag und Bekanntmachung des Hinweises auf die Patenterteilung: **07.10.2020**
(21) Anmeldenummer: 11714954.2
(22) Anmeldetag: 16.03.2011
(51) Int. Cl.: B23Q 3/12, B23Q 3/18

(54) **BEFESTIGUNGSEINRICHTUNG ZUR BEFESTIGUNG EINES SPANNFUTTERS AN EINER DREHSPINDEL**
SECURING DEVICE FOR SECURING A CHUCK ON A ROTATING SPINDLE
DISPOSITIF DE FIXATION POUR LA FIXATION D'UN MANDRIN DE SERRAGE SUR UNE BROCHE ROTATIVE

(30) Priorität: 20.09.2010 DE 102010041055; 01.04.2010 DE 202010014139 U
(43) Veröffentlichungstag der Anmeldung: 06.02.2013
(73) Patentinhaber: Schunk GmbH & Co. KG Spann- und Greiftechnik, 74348 Lauffen am Neckar (DE)
(72) Erfinder: SCHRÄDER, Philipp, 88512 Mengen (DE); HOLSTEIN, Alexander, 88499 Heiligkreuztal (DE)
(74) Vertreter: DREISS Patentanwälte PartG mbB
(86) Internationale Anmeldenummer: PCT/EP2011/053997
(87) Internationale Veröffentlichungsnummer: WO 2011/120810

(56) Entgegenhaltungen:
- EP-A2- 0 244 667
- EP-A2- 0 339 282
- DE-C- 724 892
- US-A- 2 723 861
- US-A- 4 833 955
- US-A1- 2005 013 675

## Beschreibung

Die Erfindung betrifft eine Kombination aus einem Spannfutter und einer Befestigungseinrichtung zur Befestigung des insbesondere kraftbetätigbaren Spannfutters an einer Drehspindel einer Maschine, wobei das Spannfutter einen mit Futterbacken bewegungsgekoppelten Zugadapter umfasst und maschinenseitig ein mit dem Zugadapter koppelbares Zugrohr vorgesehen ist. Über das Zugrohr, das in axialer Richtung verlagerbar ist, wird in der Regel ein Futterkolben in axialer Richtung bewegt, der über eine geeignete Mechanik mit den Futterbacken derart bewegungsgekoppelt ist, dass beim axialen Bewegen des Zugrohrs bzw. des Futterkolbens die Futterbacken in radialer Richtung bewegt werden. Über ein derartiges Zugrohr können folglich vom Spannfutter aufzunehmende Werkstücke automatisiert gespannt werden.

Zur Verbindung des Zugrohres mit dem Futterkolben ist es bekannt, am Spannfutter einen Zugadapter vorzusehen, der über ein Gewinde mit dem Zugrohr lösbar verschraubt ist. Über ein derartiges Gewinde können in axialer Richtung ausreichend Kräfte übertragen werden.

Soll das Spannfutter an einer entsprechenden Maschine ausgetauscht werden, so ist dies mit vergleichsweise viel Aufwand verbunden. In der Regel sind zunächst Befestigungsschrauben zu lösen, welche das Spannfutter mit einem Spindelflansch verbinden. Zudem ist der Zugadapter vom Zugrohr abzuschrauben. Insgesamt ist dies vergleichsweise zeitaufwändig.

Aus der US 4 833 955 ist ein Drehfutter bekannt, welches über eine Befestigungseinrichtung an einer Maschine verriegelbar ist. Die Befestigungseinrichtung umfasst dabei eine Drehplatte und radial verlagerbare Backen, die mit einem Adapter zusammen wirken.

Aus der EP 0 244 667 A2 ist eine Vorrichtung zur Befestigung eines Werkstückhalters an einer Spindel bekannt. Dabei werden Verstellglieder über ein Antriebsglied verstellt, die ihrerseits Kopfbolzen verstellen, welche über Hebel Schiebemuffen axial betätigen. Die EP 0 244 667 A2 offenbart eine Kombination aus einem Spannfutter und einer Befestigungseinrichtung zur Befestigung des Spannfutters an einer Drehspindel einer Maschine mit den Merkmalen des Oberbegriffs des unabhängigen Anspruchs 1.

Aus der US 2 723 861 A ein zentrisches Spannfutter bekannt.

Der vorliegenden Erfindung liegt deshalb die Aufgabe zugrunde, ein Spannfutter und eine Befestigungseinrichtung der eingangs genannten Art vorzuschlagen, welche ein vergleichsweise einfaches und rasches Wechseln eines Spannfutters an einer Drehspindel einer Maschine zulassen.

Diese Aufgabe wird durch eine ein Spannfutter und eine Befestigungseinrichtung mit den Merkmalen des Anspruchs 1 gelöst. Die Erfindung hat insbesondere den Vorteil, dass eine sichere Befestigung auf vergleichsweise einfache Art und Weise ermöglicht wird Zudem kann vorteilhaft sein, dass - bei Verwendung von kraftbetätigbaren Spannfuttern - der Zugadapter nicht vom Zugrohr, wie beim bekannten Stand der Technik, abgeschraubt werden muss. Vielmehr wird lediglich das Drehglied betätigt. Dieses Drehglied betätigt seinerseits die Spannschieber, welche beispielsweise auf vorgesehene Koppelabschnitte derart wirken, dass der Zugadapter vom Zugrohr insbesondere in axialer Richtung abnehmbar ist. Der Grundkörper als solcher ist dabei insbesondere mittels Befestigungsmitteln wie beispielsweise Befestigungsschrauben an der Drehspindel befestigt. Mehrere Drehglieder und/oder Spannschieber können vorgesehen sein.

Die Erfindung soll dabei aber nicht auf kraftbetätigbare Spannfutter beschränkt sein, sondern auch manuell betätigbare Systeme erfassen.

Bei einer Weiterbildung der Erfindung ist vorgesehen, dass der Grundkörper einen Futteraufnahmeabschnitt vorsieht und die Spannschieber in einer insbesondere radial äußeren Verriegelungslage in den Futteraufnahmeabschnitt zur Verriegelung des Spannfutters mit der Befestigungseinrichtung eingreifen. Die Spannschieber haben hierbei eine Doppelfunktion. In der radial inneren beziehungsweise äußeren Freigabelage betätigen sie die Koppelabschnitte zum Abnehmen des Zugadapters vom Zugrohr. In der radial äußeren beziehungsweise inneren Lage, in der die Koppelabschnitte den Zugadapter am Zugrohr koppeln, wird zudem das Spannfutter an der Befestigungseinrichtung, welche ihrerseits an der Drehspindel befestigt ist, verriegelt. Hierzu greifen die Spannscheiber in den Futteraufnahmeabschnitt, in den dann das Spannfutter wenigstens abschnittsweise hineinragt, ein.

Über entsprechend vorgesehene Zentrierungsmittel kann beim Verriegeln des Spannfutters an der Befestigungseinrichtung eine geeignete Zentrierung erfolgen.

Um eine vergleichsweise einfache Verdrehung des Drehglieds zu ermöglichen, kann ein mit dem Drehglied bewegungsgekoppelter, tangential zum Drehglied verlagerbares Steuermittel vorgesehen sein. Durch tangentiale Verlagerung des Steuermittels kann folglich eine Drehbewegung in das Drehglied eingeleitet werden.

Zum radialen Verlagern des Steuermittels ist vorteilhaft, wenn das Steuermittel eine Gewindebohrung aufweist und wenn eine Verstellschraube vorgesehen ist, über die das Steuermittel verlagerbar ist. Die Verstellschraube sieht insbesondere ein Spindelgewinde vor, das in die Gewindebohrung eingreift. Beim Verdrehen der Stellschraube wandert dann das Steuermittel entlang der Stellschraube in tangentialer Richtung und bewirkt ein Verdrehen des Drehglieds. Die Verstellschraube ist insbesondere handbetätigbar. Folglich ist denkbar, dass durch Verdrehen lediglich dieser einen Verstellschraube die Spannschieber von der Verriegelungslage in die Freigabelage und umgekehrt überführt werden können.

Zur radialen Bewegungsführung der Spannschieber ist vorteilhaft, wenn diese im Grundkörper in radialer Richtung verlagerbar geführt angeordnet sind. Vorteilhafterweise sind jeweils symmetrisch einander gegenüberliegende Spannschieberpaare vorgesehen.

Das Drehglied als solches kann insbesondere als Drehring ausgebildet sein, der vorzugsweise konzentrisch um die Mittellängsachse verlaufend angeordnet ist.

Zur Bewegungskopplung des Drehglieds mit den Spannschiebern ist denkbar, dass das Drehglied Steuerkurven bzw. Steuernocken umfasst und dass die Spannschieber mit dem Steuerkurven bzw. Steuernocken korrespondierende Steuernocken bzw. Steuerkurven aufweisen. Hierdurch kann aus der Drehbewegung des Drehglieds eine radiale Bewegung der Spannschieber erreicht werden. Die Steuerkurven verlaufen dabei vorzugsweise schräg zu einer Radiallinie oder, um eine gewisse Kraftverstärkung zu erreichen, entlang einer entsprechend gekrümmten Linie.

Ferner ist vorteilhaft, wenn der Abschnitt der Spannschieber, der in den Futteraufnahmeabschnitt eingreift, Einzugsschrägen aufweist, über welche das Spannfutter beim Verlagern der Spannschieber in die Verriegelungslage das Spannfutter gegen die Befestigungseinrichtung beaufschlagen. Über die Einzugsschrägen kann folglich gewährleistet werden, dass das Spannfutter unter einer axialen Vorspannkraft an der Befestigungseinrichtung, insbesondere großflächig, zum Anliegen kommt.

Die erfindungsgemäße Kombination eines Spannfutters und einer Befestigungseinrichtung kann vorzugsweise in ein Befestigungssystem mit den Merkmalen des Anspruchs 10 aufgenommen werden. Ein derartiges Befestigungssystem umfasst eine Befestigungseinrichtung, eine Drehspindel, ein Zugrohr und ein über das Zugrohr kraftbetätigbares Spannfutter. Das Befestigungssystem zeichnet sich insbesondere dadurch aus, dass am Zugadapter des Spannfutters bzw. am maschinenseitigen Zugrohr mit den Spannschiebern betätigbare Koppelabschnitte vorgesehen sind, wobei am Zugrohr bzw. am Zugadapter mit den Koppelabschnitten zusammenwirkende Gegenabschnitte vorgesehen sind. Die Koppelabschnitte und Gegenabschnitte sind dabei derart ausgebildet, dass in der Verriegelungslage die Koppelabschnitte mit den Gegenabschnitten derart zusammenwirken, dass über das Zugrohr der Zugadapter in axialer Richtung betätigt werden kann. In der Freigabelage der Spannschieber kann der Zugadapter dann vom Zugrohr abgenommen werden.

Die Koppelabschnitte sind dabei vorzugsweise als einstückig mit dem Zugadapter bzw. dem Zugrohr ausgebildete, in radialer Richtung elastisch nachgiebige Zungenabschnitte ausgebildet. Die Zungenabschnitte bilden dabei Festkörpergelenke, die einteilig und einstückig mit dem Zugadapter bzw. dem Zugrohr ausgebildet sein können. Die Zungenabschnitte erstrecken sich dabei in axialer Richtung und sind vergleichsweise schlank ausgebildet, so dass sie gute elastisch nachgiebige Eigenschaften haben.

Die Zungenabschnitte weisen dabei vorzugsweise in radialer Richtung abstehende Nasen auf, die mit den Gegenabschnitten korrespondieren. Die Gegenabschnitte können insbesondere als Nutaussparungen oder als umlaufende Nut ausgebildet sein, in welche die Nasen in der Verriegelungslage eingreifen. In der Freigabelage werden die Zungenabschnitte dann so weit elastisch nach radial innen verformt, dass die Nasen aus den Gegenabschnitten ausrücken und ein axiales Abnehmen des Spannfutters möglich ist.

Die Spannschieber sind dabei ihrerseits vorzugsweise so ausgebildet, dass jeweils ein Spannschieber mehrere benachbarte Zungenabschnitte betätigt. Dies hat den Vorteil, dass mit vergleichsweise wenig Spannschiebern eine vergleichsweise große Anzahl von Zungenabschnitten betätigt werden kann.

Weiter ist vorteilhaft, wenn der Futteraufnahmeabschnitt ringartig ausgebildet ist und wenn das Spannfutter einen Spannring zum Einführen in den Futteraufnahmeabschnitt aufweist. Der Spannring kann insbesondere eine umlaufende Ringnut derart vorsehen, dass die Spannschieber in der Verriegelungslage in die Ringnut eingreifen und damit das Spannfutter sicher an der Befestigungseinrichtung gehalten wird. Die Ringnut ihrerseits kann dabei eine schräg zur Mittellängsachse verlaufende, insbesondere konusförmige Oberflächenkontur aufweisen, und zwar derart, dass beim Verlagern der Spannschieber in die Verriegelungslage der Spannring, und damit das Spannfutter, hin zur Befestigungseinrichtung gezogen wird.

Weitere Einzelheiten und vorteilhafte Ausgestaltungen der Erfindung sind der nachfolgenden Beschreibung zu entnehmen, anhand derer ein Ausführungsbeispiel der Erfindung näher beschrieben und erläutert ist.

Es zeigen
Figur 1 einen Längsschnitt durch ein Befestigungssystem mit einer Befestigungseinrichtung und einer Drehspindel;
Figur 2 die Vorderansicht des Befestigungssystems gemäß Figur 1 auf das Spannfutter;
Figur 3 die in der Figur 1 gezeigte Befestigungseinrichtung als Baugruppe;
Figur 4a b, c) verschiedene Ansichten der Befestigungseinrichtung gem. Figur 3 in der Verriegelungslage;
Figur 5a,b, c) verschiedene Ansichten der Befestigungseinrichtung gemäß Figur 3 in der Freigabelage;
Figur 6 einen Schnitt durch die Befestigungsreinrichtung gemäß Figur 3 mit Zugrohr und Zugadapter;
Figur 7 einen der Figur 6 entsprechenden Schnitt in der Freigabelage;
Figur 8a, b, c verschiedene Ansichten des Grundkörpers der Befestigungseinrichtung;
Figur 9a und b verschiedene Ansichten des Drehglieds der Befestigungseinrichtung;
Figur 10 verschiedene Ansichten eines Spannschiebers der Befestigungsein richtung;
Figur 11a und b verschiedene Ansichten eines Zugadapters der Befestigungseinrichtung; und
Figur 12 verschiedene Ansichten des Spannrings der Drehspindel;
Figur 13a einen der Figur 6 entsprechenden Schnitt ohne Zugrohr und Zugadapter, aber mit dem Spannfutteraufnahme;
Figur 13b einen vergrößerten Ausschnitt aus Figur 13a;
Figur 14a einen Schnitt entsprechend der Figur 13a durch eine andere Ausführungsform;
Figur 14b einen vergrößerten Ausschnitt aus Figur 14a;
Figur 15a einen der Figur 13a entsprechenden Schnitt einer weiteren Ausführungsform;
Figur 15b einen vergrößerten Ausschnitt aus Figur 15a;
Figur 16a einen der Figur 13a entsprechenden Schnitt einer weiteren Ausführungsform;
Figur 16b einen vergrößerten Ausschnitt aus Figur 16a.

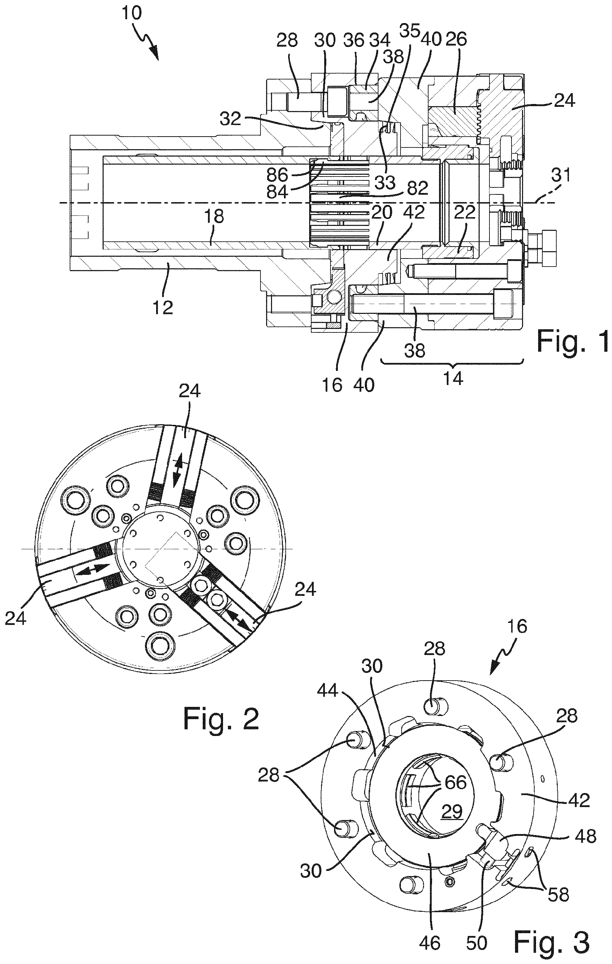

In der Figur 1 ist ein Befestigungssystem 10, das auch als Verriegelungseinrichtung bezeichnet werden kann, gezeigt, welches eine maschinenseitige Drehspindel 12, ein Spannfutter 14 sowie einen Befestigungsabschnitt in Form einer Befestigungseinrichtung 16, mittels welcher das Spannfutter 14 an der Drehspindel 12 befestigt ist, umfasst. Ferner ist ein maschinenseitiges Zugrohr 18 vorgesehen, welches über einen futterseitigen Zugadapter 20 einen Spannkolben 22 in axialer Richtung betätigt. Der Spannkolben 22 ist dabei mit aufeinander zu- und voneinander wegbewegbaren, in der Ansicht gemäß Figur 2 deutlich zu erkennenden Futterbacken 24 bewegungsgekoppelt. Die Bewegungskopplung ist derart, dass ein axiales Verschieben des Spannkolbens 22 über mechanische Stellglieder 26 ein radiales Bewegen der Futterbacken 24 aufeinander zu bzw. voneinander weg bewirkt. Über eine axiale Bewegung des Zugrohrs 20 kann folglich das Spannfutter 14 bzw. dessen Futterbacken 24, kraftbetätigt werden.

Die Befestigungseinrichtung 16 weist im mittleren Bereich einen zentralen Durchbruch 29 auf. Die Mittellängsachse ist mit dem Bezugszeichen 31 gekennzeichnet.

Wie aus Figur 1 deutlich wird, ist die Befestigungseinrichtung 16 über Befestigungsschrauben 28 an die Drehspindel 12 angeflanscht. Zur Zentrierung der Befestigungseinrichtung 16 weist diese einen Innenkonus 30 auf, der mit einem spindelseitigen Außenkonus 32 zusammenwirkt. Zur Zentrierung des Spannfutters 14 an der Befestigungseinrichtung 16 weist die Befestigungseinrichtung 16 einen Konusabschnitt 33 auf, der mit einem futterseitigen Gegenkonusabschnitt 35 zusammenwirkt. Der Konusabschnitt 33 und der Gegenkonusabschnitt 35 bilden dabei eine Zentriereinrichtung 100.

Das Spannfutter 14 weist auf seiner der Befestigungseinrichtung 16 zugewandten Seite einen Spannring 34 auf, der in einen ringartig ausgebildeten Futteraufnahmeabschnitt 36 eingreift. Wie ebenfalls aus Figur 1 deutlich wird, ist der Spannring 34 mittels Befestigungsschrauben 38 an einer Spannfutteraufnahme 40 angeschraubt.

In der Figur 3 ist die Befestigungseinrichtung 16 als separate Baugruppe dargestellt. Dabei ist zu erkennen, dass die Befestigungseinrichtung 16 einen Grundkörper 42 aufweist, welcher die Befestigungsschrauben 28 aufnimmt. Ferner wird der Innenkonus 30 ebenfalls vom Grundkörper 42 gebildet.

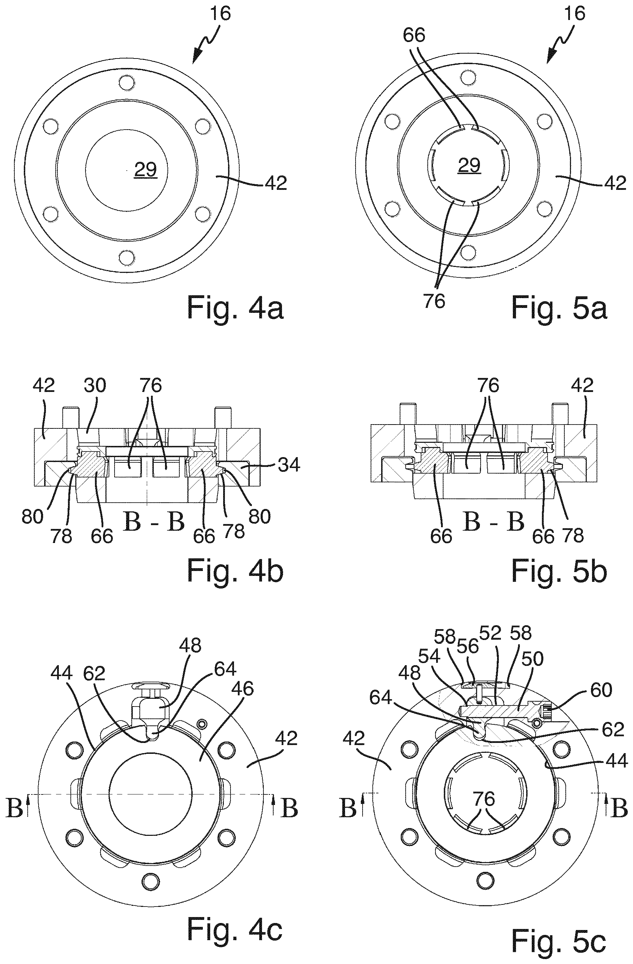

Wie insbesondere aus den Figuren 3, 4 und 5 deutlich wird, weist der Grundkörper 42 auf seiner der Drehspindel 12 zugewandten Seite eine Ringaufnahme 44 auf, in welcher ein Drehglied 46 in Form eines Drehrings drehbar gelagert angeordnet ist. Zur Verdrehung des Drehglieds 46 ist ein mit dem Drehglied 46 bewegungsgekoppeltes Steuermittel in Form eines Steuerkolbens 48 vorgesehen. Wie insbesondere aus Figur 5c deutlich wird, ist der Steuerkolben 48 in tangentialer Richtung entlang einer Verstellschraube 50 verlagerbar. Die Verstellschraube 50 weist ein Spindelgewinde 52 auf, das mit einem Innengewinde 54 des Steuerkolbens 48 derart zusammenwirkt, dass beim Verdrehen der Stellschraube 50 der Steuerkolben 48 in Längsrichtung der Verstellschraube 50 bewegt wird. Zur Positionsanzeige des Steuerkolbens 48 ist am Steuerkolben 48 ein Sichtschieber 56 vorgesehen, dessen Lage durch am Grundkörper 42 vorgesehene Sichtfenster 58 optisch erkennbar ist.

Die Verstellschraube 50 weist an ihrem frei zugänglichen Ende einen Betätigungsabschnitt 60 auf, in den ein insbesondere manuell verdrehbarer Schraubenschlüssel zum Verdrehen der Verstellschraube 50 einführbar ist. Zur Bewegungskopplung des Steuerkolbens 48 mit dem Drehglied 46 weist das Drehglied 46 eine Nockenaussparung 62 auf, in welche der steuerkolbenseitige Nocken 64 eingreift.

Das Drehglied 46 ist mit Verriegelungsmitteln in Form von Spannschiebern 66 derart bewegungsgekoppelt, dass beim Verdrehen des Drehglieds 46 die Spannschieber 66 ihre radiale Lage ändern und von einer radial äußeren Verriegelungslage in eine radial innere Freigabelage überführbar sind. In der Figur 4a, 4b und 4c ist die radial äußere Verriegelungslage der Spannschieber 66 gezeigt. In der Figur 5a, 5b und 5c ist die radial innere Freigabelage der Spannschieber 66 gezeigt.

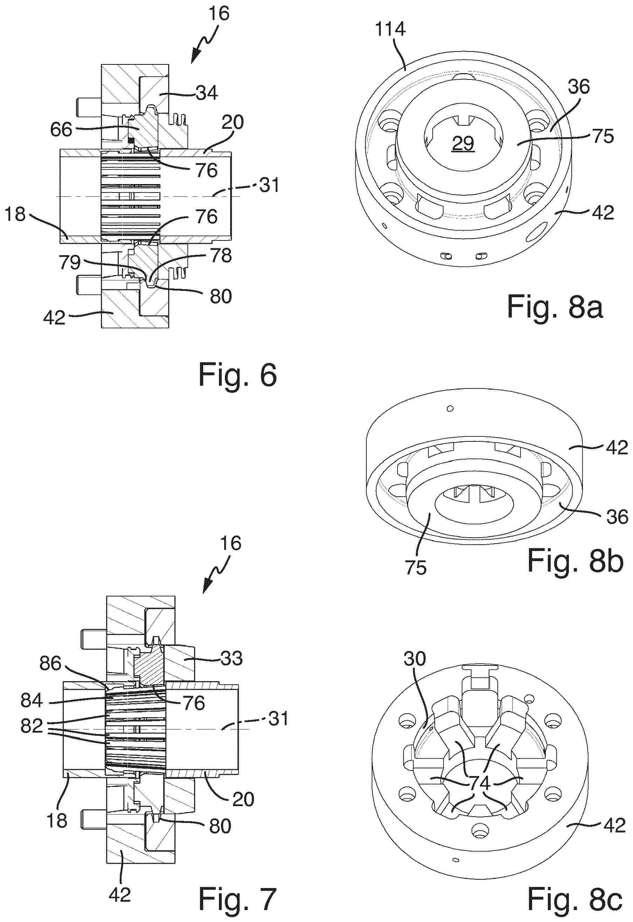

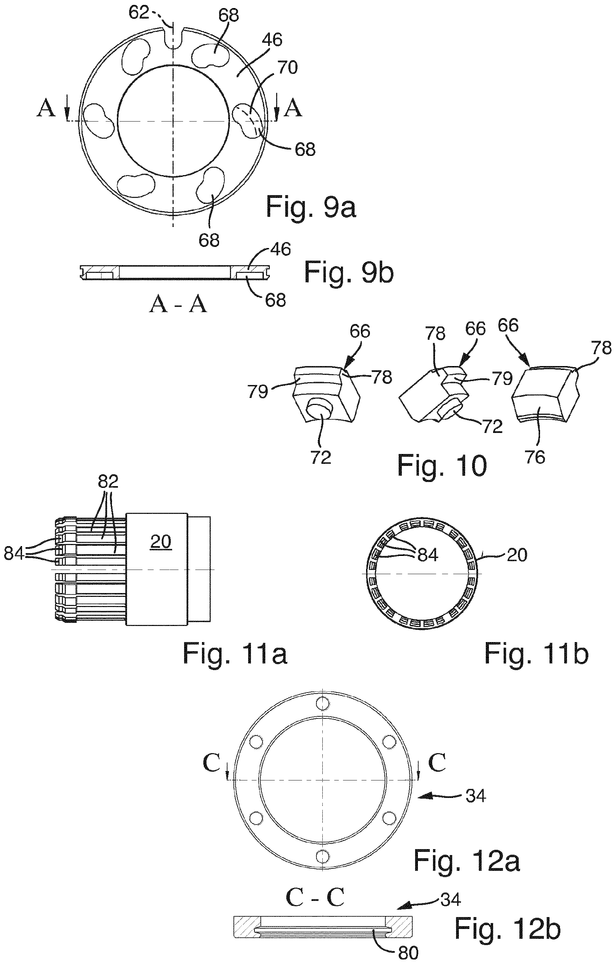

Zur Bewegungskopplung des Drehglieds 46 mit den Spannschiebern 66 weist das Drehglied 46 auf seiner den Spannschiebern 66 zugewandten Oberseite Ausnehmungen in Form von Steuerkurven 68 auf. In der Figur 9a und 9b, die das Drehglied 46 als Einzelteil zeigen, sind diese Steuerkurven 68 deutlich zu erkennen. Die Steuerkurven 68 weisen dabei eine jeweils leicht gekrümmte Achse 70 auf, die derart ist, dass seine Kraftverstärkung hin in die radial äußere Verriegelungslage erfolgt. Die Spannschieber 66, die in Figur 10 als Einzelteil dargestellt sind, weisen auf der dem Drehglied 46 zugewandten Seite jeweils einen Steuernocken 72 auf, der mit jeweils einer Steuerkurve 68 zusammenwirkt. Die Spannschieber 66 sind als solche im Grundkörper 42 in radialer Richtung verlagerbar gelagert. Dies wird insbesondere aus Figur 8c deutlich, wo Führungsnuten 74 für die jeweiligen Spannschieber 66 deutlich zu erkennen sind.

Wie aus Figur 8 deutlich wird, weist der Grundkörper 42 eine innenliegende, umlaufende Ringwand 75 auf, die auf der radial innenliegenden Seite den zentralen Durchbruch 29 begrenzt und auf der radial außen liegenden Seite den ringartigen Futteraufnahmeabschnitt 36. Die Führungsnuten 74 erstrecken sich durch die Ringwand 75 hindurch, so dass die Spannschieber 66 je nach Lage zum einen in den Bereich des zentralen Durchbruchs 29 eingreifen (Freigabelage) und zum anderen in den Futteraufnahmeabschnitt 36 eingreifen (Verriegelungslage).

Die Spannschieber 66 weisen einen radial innenliegenden Abschnitt 76 und einen radial außen liegenden Abschnitt 78 auf. Wie aus Figur 4b deutlich wird, weist der im Querschnitt v-förmig ausgebildete, radial äußere Abschnitt 78 Einzugsschrägen 79 auf und greift in der Verriegelungslage in eine am Spannring 34 vorgesehene umlaufende Ringnut 80 ein, die ebenfalls einen v-förmigen Querschnitt aufweist. Die Ringnut 80 ist insbesondere in Figur 12a und 12b deutlich zu erkennen, in welcher der Spannring 34 als Einzelteil dargestellt ist. Aufgrund der Einzugsschrägen 79 wird das Spannfutter 14 beim Verlagern der Spannschieber 66 in die radial äußere Verriegelungslage gegen die Befestigungseinrichtung 16 beaufschlagt. Hierdurch wird eine sichere Verriegelung des Spannrings 34 in der Verriegelungslage an der Befestigungseinrichtung 16 erreicht.

Wie aus Figur 5b deutlich wird, in welcher sich die Spannschieber 66 in der radial innenliegenden Freigabelage befinden, rücken die Abschnitte 78 aus der Ringnut 80 aus, so dass das Spannfutter 14 samt Spannring 34 von der Befestigungseinrichtung 16 entnommen werden kann.

Im eingebauten Zustand der Befestigungseinrichtung 16 umgibt der Grundkörper 42, wie aus Figur 1 deutlich wird, den Zugadapter 20. In der Figur 1 ist eine Schnittebene gewählt, in der die Spannschieber nicht liegen und deshalb auch nicht dargestellt sind.

In Figur 6 und 7 ist die Befestigungseinrichtung 16 als Einzelteil mit einem Abschnitt des Zugrohrs 18 und des Zugadapters 20 in einem Schnitt dargestellt, in dem die Spannschieber 66 zu erkennen sind. Figur 6 zeigt die Verriegelungslage; der spannfutterseitige Spannring 34 ist über die Spannschieber 66 an der Befestigungseinrichtung 16 verriegelt gehalten. Wie aus Figur 6, Figur 7 und auch Figur 11, welche den Zugadapter 20 als Einzelteil zeigt, deutlich wird, weist der Zugadapter 20 auf der dem Zugrohr 18 zugewandten Seite Koppelabschnitte 82 in Form von einstückig mit dem Zugadapter 20 ausgebildeten, in radialer Richtung elastisch nachgiebigen Zungenabschnitten auf. Die Zungenabschnitte erstrecken sich dabei in axialer Richtung und sind in radialer Richtung elastisch nachgiebig. Die Zungenabschnitte weisen im Bereich ihres freien Endes nach radial außen weisende Nasen 84 auf. Diese Nasen 84 greifen, wie in Figur 1 und Figur 6 deutlich zu erkennen ist, in einen zugrohrseitigen Gegenabschnitt 86 ein, der als umlaufende Nut ausgebildet ist. Die Zungenabschnitte sind dabei am Zugadapter 20 derart angeordnet, dass sie in der radial inneren Freigabelage der Spannschieber 66, wie aus Figur 7 deutlich wird, nach radial innen elastisch verformt werden. Die Verformung geht soweit, dass die Nasen 84 aus den Gegenabschnitten 86 ausrücken und der Zugadapter 20 samt Spannfutter 14 dann in axialer Richtung abgenommen werden kann. Die Spannschieber 66 haben folglich eine Doppelfunktion; zum einen rücken ihre Abschnitte 78 aus dem Spannring 34 aus, zum anderen betätigen sie die Zungenabschnitte 82, so dass deren Nasen 84 aus den Gegenabschnitten 86 ausrücken. Das Spannfutter 14 kann dann abgenommen werden.

Bei dem in den Figuren dargestellten Ausführungsbeispiel ist der die Zungenabschnitte 82 umfassende Koppelabschnitt am Zugadapter 20 angeordnet und der Gegenabschnitt am Zugrohr 18. Der Koppelabschnitt kann auch am Zugrohr 18 vorgesehen sein und der Gegenabschnitt am Zugadapter 20. Die Anordnung hat dann derart zu erfolgen, dass die Spannschieber 66 die zugrohrseitigen Koppelabschnitte betätigen, um ein Abnehmen des Spannfutters samt Zugadapter 20 zu ermöglichen.

Die beschriebene Befestigungseinrichtung 16 bzw. das gesamte Befestigungssystem 10 hat den Vorteil, dass durch Verstellen lediglich einer Schraube, nämlich der Verstellschraube 50, das Spannfutter 14 auswechselbar ist. Durch Verstellen der Verstellschraube 50 wird zum einen die Verriegelung zwischen den Spannschiebern 66 und dem Spannring 34 gelöst und zum anderen die Kopplung des Zugrohrs 18 mit dem Zugadapter 20.

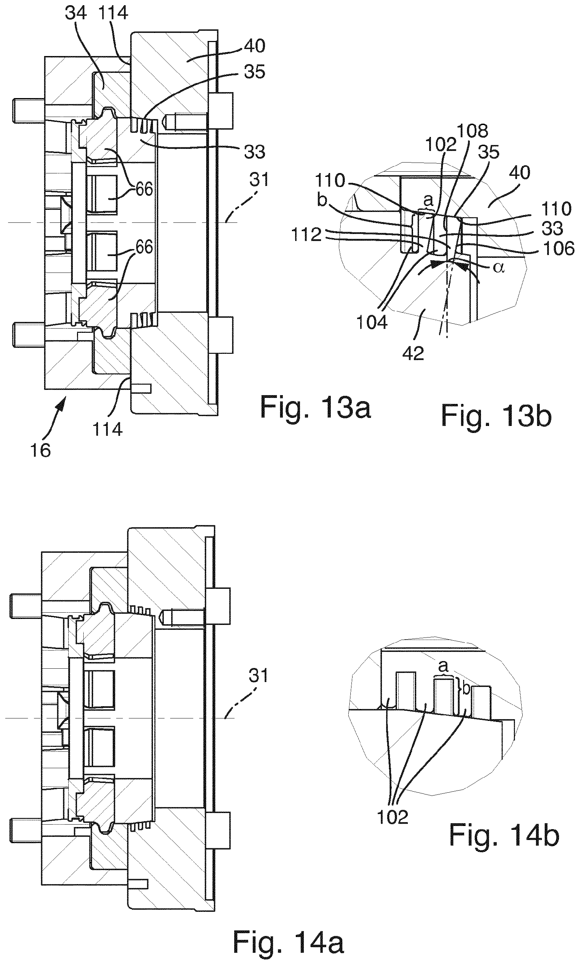

Der in der Figur 13a gezeigte Schnitt entspricht im Wesentlichen dem Schnitt gemäß Figur 6, wobei bei Figur 13a das Zugrohr und der Zugadapter nicht dargestellt sind. Anders als in Figur 6 ist in Figur 13a die spannfutterseitige Spannfutteraufnahme 40 dargestellt, an welchem der Spannring 34 befestigt ist.

Aus Figur 13a und 13b wird deutlich, dass das Befestigungssystem 10 eine Zentriereinrichtung 100 aufweist, die befestigungseinrichtungsseitig den Konusabschnitt 33 und spannfutterseitig den Gegen konusabschnitt 35 umfasst.

Wie insbesondere aus Figur 6, Figur 13a und 13b deutlich wird, wird der Konusabschnitt 33 von im Wesentlichen parallel zueinander verlaufenden Wandungsabschnitten 102 gebildet. Insgesamt sind bei der in der Figur 13 gezeigten Ausführungsform zwei Wandungsabschnitte vorgesehen, die ringartig umlaufend sind. Die Wandungsabschnitte 102 sind dabei einstückig mit dem Grundkörper 42 ausgebildet. Die Wandungsabschnitte 102 können durch Einbringen von Einstichen 104 in den Grundkörper 42 realisiert sein. Wie aus insbesondere Figur 13b deutlich wird, weisen die Wandungsabschnitte 102 jeweils eine Oberseite 106 und eine Unterseite 108 auf. Die Oberseite kann dabei parallel zur Unterseite verlaufen. Aus Figur 13b wird allerdings deutlich, dass die Oberseite 106 und die Unterseite 108 im Querschnitt keilförmig hin zur Mittellängsachse verlaufend ausgebildet sind. Die Oberseite 106 und die Unterseite 108 schließen dabei einen Keilwinkel α im Bereich von 10° ein. Die Unterseite 108 verläuft dabei im Wesentlichen senkrecht zur Mittellängsachse 31. Die Oberseite 106 ist entsprechend geneigt. Es ist auch denkbar, dass die Oberseite 106 senkrecht zur Mittellängsachse verläuft und die Unterseite 108 entsprechend geneigt ist. Denkbar ist ebenfalls, dass beide Seiten entsprechend geneigt zur Mittellängsachse 31 verlaufen. Die radial außen liegenden Mantelflächen 110 der Wandungsabschnitte 102 liegen dabei in einer konusförmigen, gekrümmten Ebenen, Im Fußbereich 112 gehen die Wandungsabschnitte 102 in den Grundkörper 42 über.

Das Spannfutter 14, beziehungsweise dessen Spannfutteraufnahme 40, weist den Gegenkonusabschnitt 35 auf, der zu dem Konusabschnitt 33 korrespondierend ausgebildet ist. Die Ausbildung ist dabei derart, dass beim axialen Aufeinander-zu-Bewegen des Spannfutters 14 auf die Befestigungseinrichtung 16 zunächst die Mantelflächen 110 der Wandungsabschnitte 102 am Gegenkonusabschnitt 35 zum Anliegen kommen. Nach dem Anliegen der Mantelflächen 110 am Gegenkonusabschnitt 35 kann dann das Spannfutter 14 weiter in axialer Richtung bewegt werden, bis das Spannfutter 14, beziehungsweise dessen Spannfutteraufnahme 40, an der Befestigungseinrichtung 16, beziehungsweise deren Grundkörper 42, zum Anliegen kommt. Dazu sieht die Befestigungseinrichtung 16, beziehungsweise deren Grundkörper 42, einen Anschlag 114 vor. Der Anschlag 114 wird von der dem Spannfutter 14 zugewandten ringartig umlaufenden Stirnfläche des Grundkörpers 42 gebildet. Insbesondere aus Figur 8a ist dieser Anschlag 114 deutlich zu erkennen.

Die Einzugskraft, mit der das Spannfutter 14 in axialer Richtung gegen die Befestigungseinrichtung 16 beaufschlagt wird, wird - wie eingangs erläutert - über das Verlagern der Spannschieber 66 in deren Verriegelungslage bereitgestellt.

Aufgrund der elastischen Nachgiebigkeit des Konusabschnitts 33, beziehungsweise dessen Wandungsabschnitte 102, in axialer Richtung, kann ein definiertes Anliegen des Spannfutters 14 am Anschlag 114 der Befestigungseinrichtung 116 gewährleistet werden. Zusätzlich kann eine funktionssichere Zentrierung erfolgen.

Bei der in Figur 14a und 14b gezeigten Ausführungsform weist nicht der Konusabschnitt 33, sondern der Gegenkonusabschnitt 35 parallel zueinander verlaufende Wandungsabschnitte 102 auf, die in axialer Richtung entsprechend nachgiebig sind. Der Konusabschnitt 33 weist im Gegensatz dazu eine geschlossene Oberfläche auf. Aufgrund der Wandungsabschnitte 102, die in Figur 14b deutlich zu erkennen sind, wird auch hier erreicht, dass nach Anlage des Konusabschnitts 33 am Gegenkonusabschnitt 35 das Spannfutter aufgrund der axialen Einzugskraft wenigstens bedingt weiter in axialer Richtung verlagerbar ist, bis das Spannfutter 14 an dem Anschlag 114 zum Anliegen kommt.

Wie insbesondere aus Figur 13b und Figur 14b deutlich wird, ist das Verhältnis der Abstände a der einzelnen Wandungsabschnitte 102 zueinander zu deren Radialerstreckung b im Bereich von 1:2 bis 1:5. Hieraus ergeben sich vorteilhafte elastische Eigenschaften der Wandungsabschnitte 102.

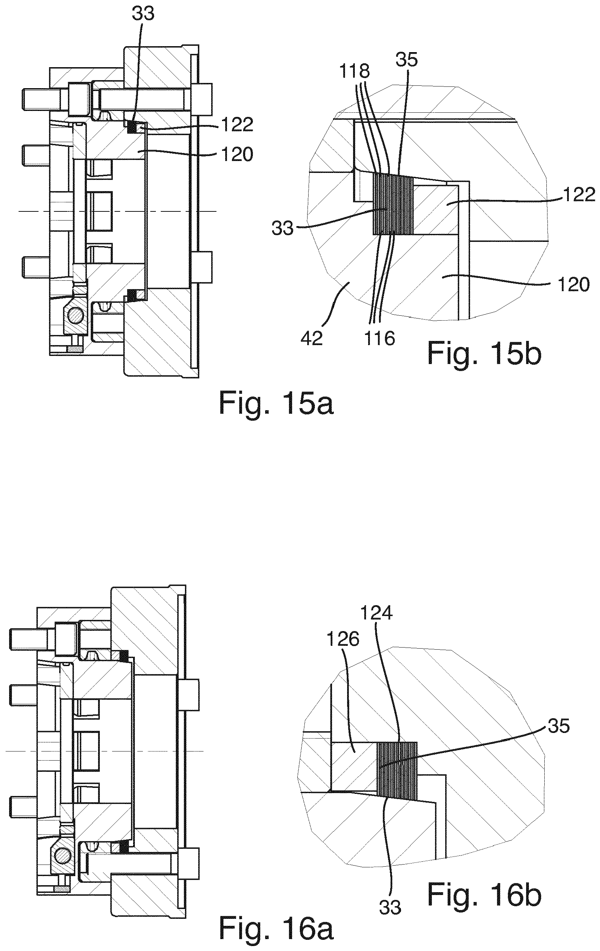

Bei der Ausführungsform gemäß Figur 15 wird der Konusabschnitt 33 von parallel aufeinander liegenden Lamellen 116 gebildet. Die radial außen liegenden, freien Stirnseiten 118 der Lamellen dienen dabei zur Anlage an den Gegenkonusabschnitt 35. Die einzelnen Lamellen 116 werden dabei von Ringscheiben gebildet, die auf einen Bolzenabschnitt 120 des Grundkörpers 42 aufgesetzt sind und über eine Sicherungsmutter 122 am Grundkörper 42 gehaltert werden. Die einzelnen Lamellen 116 weisen dabei ein zentrales Loch auf, in welches der Bolzenabschnitt 120 eingreift. Der Außendurchmesser der einzelnen Lamellen 116 nimmt dabei zur Bildung einer insgesamt konischen Mantelfläche von axial innen nach axial außen hin leicht ab. Um eine exakt konusförmige Mantelfläche zu erhalten, ist denkbar, dass die Mantelfläche der auf den Grundkörper 42 angeordneten Lamellen 116 nachbearbeitet wird.

Bei der Figur 16 sind, anders als bei der Figur 15, die Lamellen 116 nicht am Konusabschnitt 33, sondern am Gegenkonusabschnitt 35 vorgesehen. Die Lamellen 116 sind hierbei ebenfalls als Ringscheiben ausgebildet, wobei hier die konusförmige Mantelfläche von den radial innenliegenden Stirnseiten der Lamellen 116 gebildet wird. Die Lamellen 116 werden hierzu in eine am Spannfutterkörper vorgesehene Aussparung 124 eingesetzt und dort mit einem Sicherungsring 126 gesichert.

Wie aus Figur 15 und 16 deutlich wird, weisen die Lamellen 116 eine Stärke von cirka 0,5 mm bis 1 mm auf. Insgesamt sind rund fünfzehn aufeinander liegende Lamellen 116 vorgesehen. Die Lamellen 116 bieten den Vorteil, dass sie bei Einwirkung von Kräften in radialer Richtung vergleichsweise formstabil sind. Bei Einwirkung von Kräften in axialer Richtung sind sie vergleichsweise biegeweich. Hierdurch kann erreicht werden, dass nach Anliegen des Gegenkonusabschnitts 35 beziehungsweise des Konusabschnitts 33 an den entsprechenden Stirnseiten der Lamellen 116 diese in axiale Richtung elastisch so weit verformt werden, bis das Spannfutter 14, beziehungsweise die Spannfutteraufnahme 40, am Anschlag 114 zum Anliegen kommt.

## Patentansprüche

1. Spannfutter (14) und Befestigungseinrichtung (16) zur Befestigung des Spannfutters (14) an einer Drehspindel (12) einer Maschine, wobei das Spannfutter (14) einen mit Futterbacken (24) bewegungsgekoppelten Zugadapter (20) umfasst, wobei maschinenseitig ein mit dem Zugadapter (20) koppelbares Zugrohr (18)vorgesehen ist, und wobei die Befestigungseinrichtung (16) einen Grundkörper (42) und im Grundkörper (42) ein um die Mittellängsachse (31) der am Spannfutter (14) befestigbaren Befestigungseinrichtung (16) verdrehbares Drehglied (46) und wenigstens ein Spannschieber (66) vorsieht, wobei das Drehglied (46) mit dem wenigstens eine Spannschieber (66) bewegungsgekoppelt ist und dass der wenigstens eine Spannschieber (66) im Grundkörper (42) derart angeordnet ist,
dass beim Verdrehen des Drehglieds (46) der wenigstens eine Spannschieber (66) seine radiale Lage ändert, so dass der Spannschieber (66) in einer Freigabelage Koppelabschnitte (82) des Zugadapters (20) oder Zugrohrs (18) derart betätigt, dass der Zugadapter (20) vom Zugrohr (18) abnehmbar ist, und so dass der Spannschieber (66) in einer Spannlage das Spannfutter (14) in axialer Richtung gegen die Befestigungseinrichtung (16) beaufschlagt, **dadurch gekennzeichnet, dass** das Drehglied (46) mit dem wenigstens eine Spannschieber (66) direkt bewegungsgekoppelt ist und dass der wenigstens eine Spannschieber (66) im Grundkörper in rein radialer Richtung verlagerbar geführt ist.

2. Spannfutter (14) und Befestigungseinrichtung (16) nach Anspruch 1, **dadurch gekennzeichnet, dass** der Grundkörper (42) einen Futteraufnahmeabschnitt (36) vorsieht und das Spannfutter wenigstens abschnittsweise in den Futteraufnahmeabschnitt (36) hineinragt, wobei die Spannschieber (66) in einer der Freigabelage fern liegenden Verrieglungslage in den Futteraufnahmeabschnitt (36) zur Verrieglung des Spannfutters (14) mit der Befestigungseinrichtung (16) eingreifen.

3. Spannfutter (14) und Befestigungseinrichtung (16) nach Anspruch 2, **dadurch gekennzeichnet, dass** der Futteraufnahmeabschnitt (36) ringartig ausgebildet ist und dass das Spannfutter (14) einen Spannring (34) zum Einführen in den Futteraufnahmeabschnitt (36) aufweist.

4. Spannfutter (14) und Befestigungseinrichtung (16) nach Anspruch 1, 2 oder 3, **dadurch gekennzeichnet, dass** der Grundkörper (42) Zentrierungsmittel (33) zur Zentrierung des Spannfutters (14) an der Befestigungseinrichtung (16) vorsieht.

5. Spannfutter (14) und Befestigungseinrichtung (16) nach einem der vorherigen Ansprüche, **dadurch gekennzeichnet, dass** zur Verdrehung des Drehglieds (46) ein mit dem Drehglied (46) bewegungsgekoppeltes, tangential zum Drehglied (46) verlagerbares Steuermittel (48) vorgesehen ist.

6. Spannfutter (14) und Befestigungseinrichtung (16) nach Anspruch 4, **dadurch gekennzeichnet, dass** das Steuermittel (48) eine Spindelbohrung (54) aufweist und dass eine Verstellschraube (50) vorgesehen ist, über die das Steuermittel (48) verlagerbar ist.

7. Spannfutter (14) und Befestigungseinrichtung (16) nach einem der vorangegangenen Ansprüche, **dadurch gekennzeichnet, dass** das Drehglied (46) Steuerkurven (68) bzw. Steuernocken (72) umfasst und dass die Spannschieber (66) mit den Steuerkurven (68) bzw. Steuernocken (72) korrespondierende Steuernocken (72) bzw. Steuerkurven (68) aufweisen.

8. Spannfutter (14) und Befestigungseinrichtung (16) nach einem der vorangegangenen Ansprüche, **dadurch gekennzeichnet, dass** der Abschnitt (78) der Spannschieber (66), der in den Futteraufnahmeabschnitt (36) eingreift, Einzugschrägen (79) aufweist, über welche das Spannfutter (14) beim Verlagern der Spannschieber (66) in die Verriegelungslage das Spannfutter (14) gegen die Befestigungseinrichtung (16) beaufschlagen.

9. Spannfutter (14) und Befestigungseinrichtung (16) nach einem der vorangegangenen Ansprüche, **dadurch gekennzeichnet, dass** am Grundkörper (42) Zentrierungsmittel (30) zur Zentrierung der Befestigungseinrichtung (16) an der Drehspindel (12) aufweist.

10. Befestigungssystem (10), umfassend ein Spannfutter (14) und ein Befestigungseinrichtung (16) nach einem der vorherigen Ansprüche, eine Drehspindel (12) und das Zugrohr (18), wobei am Zugadapter (20) bzw. am Zugrohr (18) mit den Spannschiebern (66) betätigbare Koppelabschnitte (82) und am Zugrohr (18) bzw. am Zugadapter (20) mit den Koppelabschnitten (82) zusammenwirkende Gegenabschnitte (80) vorgesehen sind.

11. Befestigungssystem (10) nach Anspruch 10, **dadurch gekennzeichnet, dass** die Koppelabschnitte (82) als einstückig mit dem Zugadapter (20) bzw. dem Zugrohr (18) ausgebildete, in radialer Richtung elastisch nachgiebige Zungenabschnitte (82) ausgebildet sind.

12. Befestigungssystem (10) nach Anspruch 10 oder 11, **dadurch gekennzeichnet, dass** die Zungenabschnitte in radialer Richtung abstehende Nasen (84) aufweisen, die mit als Nutaussparungen ausgebildeten Gegenabschnitten (80) zusammenwirken.

13. Befestigungssystem (10) nach einem der Ansprüche 10 bis 12, **dadurch gekennzeichnet, dass** die Spannschieber (66) derart ausgebildet sind, dass sie jeweils mehrere Zungenabschnitte (82) betätigen.

## Claims

1. Chuck (14) and securing device (16) for securing the chuck (14) to a rotating spindle (12) of a machine, wherein the chuck (14) comprises a tension adapter (20) movably coupled to chuck jaws (24), wherein a tension tube (18) which can be coupled to the tension adapter (20) is provided on the machine side, and wherein the securing device (16) provides a base body (42) and, in the base body (42), a rotary member (46) rotatable about the central longitudinal axis (31) of the securing device (16) which can be fastened to the chuck (14), and at least one chucking slide (66), the rotary member (46) being movement-coupled to the at least one chucking slide (66), and the at least one chucking slide (66) being arranged in the base body (42) i in such a way that in that when the rotary member (46) is rotated, the at least one chucking slide (66) changes its radial position so that the chucking slide (66) actuates coupling portions (82) of the tension adapter (20) or tension tube (18) in a release position such that the tension adapter (20) can be removed from the tension tube (18), and so that the chucking slide (66) in a clamping position acts on the chuck (14) in the axial direction against the securing device (16), **characterized in that** the rotary member (46) is directly motion-coupled to the at least one slide (66) and that the at least one slide (66) is guided in the base body so as to be displaceable in the purely radial direction.

2. Chuck (14) and securing device (16) as claimed in claim 1, **characterized in that** the basic body (42) provides a chuck reception portion (36), and the chuck projects at least in sections into the chuck reception portion (36), wherein in a locking position remote from the release position, the chucking slides (66) engage into the chuck reception portion (36) for locking the chuck (14) with the securing device (16).

3. Chuck (14) and securing device (16) as claimed in claim 2, **characterized in that** the chuck reception portion (36) is ring-shaped and that the chuck (14) has a clamping ring (34) for insertion into the chuck reception portion (36) .

4. Chuck (14) and securing device (16) as claimed in claim 1, 2 or 5, **characterized in that** the basic body (42) provides centering means (33) for centering the chuck (14) on the securing device (16).

5. Chuck (14) and securing device (16) as claimed in one of the preceding claims, **characterized in that**, to rotate the rotary member (46), a control means (48) motionally coupled to the rotary member (46) and displaceable tangentially with respect to the rotary member (46) is provided.

6. Chuck (14) and securing device (16) as claimed in claim 4, **characterized in that** the control means (48) has a spindle bore (54), and **in that** an adjusting screw (50) is provided, via which the control means (48) can be displaced.

7. Chuck (14) and securing device (16) as claimed in one of the preceding claims, **characterized in that** the rotary member (46) comprises control curves (68) or control cams (72), and **in that** the chucking slides (66) have control cams (72) or control curves (68) corresponding to the control curves (68) or control cams (72).

8. Chuck (14) and securing device (16) as claimed in one of the preceding claims, **characterized in that** that portion (78) of the chucking slides (66) which engages into the chuck reception portion (36) has draw-in slopes (79), via which the chuck (14) load the chuck (14) against the securing device (16) when the chucking slides (66) are displaced into the locking position.

9. Chuck (14) and securing device (16) as claimed in one of the preceding claims, **characterized in that** the basic body (42) has centering means (30) for centering the securing device (16) on the rotating spindle (12).

10. A securing system (10) comprising a chuck (14) and securing device (16) as claimed in one of the preceding claims, a rotating spindle (12) and the tension tube (18), wherein coupling portions (82) actuable by means of the chucking slides (66) being provided on the tension adapter (20) or on the tension tube (18) and counter portions (80) which cooperate with the coupling portions (82) being provided on the tension tube (18) or on the tension adapter (20).

11. The securing system (10) as claimed in claim 10, **characterized in that** the coupling portions (82) are designed as tongue portions (82) formed in one piece with the tension adapter (20) or the tension tube (18) and elastically flexible in the radial direction.

12. The securing system (10) as claimed in claim 10 or 11, **characterized in that** the tongue portions have noses (84) which project in the radial direction and which cooperate with counter portions (80) designed as groove clearances.

13. The securing system (10) as claimed in one of claims 10 to 12, **characterized in that** the chucking slides (66) are designed in such a way that they actuate in each case a plurality of tongue portions (82).

## Revendications

1. Mandrin de serrage (14) et dispositif de fixation (16) pour fixer le mandrin de serrage (14) à une broche rotative (12) d'une machine, où le mandrin de serrage (14) comprend un adaptateur de traction (20) couplé de manière mobile avec des mâchoires de serrage de mandrin de serrage (24), où un tube de traction (18) pouvant être couplé avec un adaptateur de traction côté machine (20) est prévu, et où le dispositif de fixation (16) comporte un corps de base (42) et, dans le corps de base (42), un élément rotatif (46) qui peut être tourné autour de l'axe longitudinal central (31) du dispositif de fixation (16) qui peut être fixé au mandrin de serrage (14) et au moins un coulisseau de serrage (66), où l'élément rotatif (46) est couplé de manière mobile au au moins un coulisseau de serrage (66), et le au moins un coulisseau de serrage (66) est agencé dans le corps de base (42) de telle manière que par l'intermédiaire d'une rotation de l'élément rotatif (46), le au moins un coulisseau de serrage (66) change sa position radiale de sorte que le coulisseau de serrage (66) actionne des sections de couplage (82) de l'adaptateur de traction (20) ou du tube de traction (18) dans une position de libération, de telle sorte que l'adaptateur de traction (20) peut être retiré du tube de traction (18), et de sorte que le coulisseau de serrage (66), dans une position de serrage du mandrin de serrage (14), est sollicité dans une direction axiale contre le dispositif de fixation (16), **caractérisés en ce que** l'élément rotatif (46) est couplé de manière mobile directement avec le au moins un coulisseau de serrage (66), et **en ce que** le au moins un coulisseau de serrage (66) est guidé dans le corps de base en pouvant être déplacé dans une direction purement radiale.

2. Mandrin de serrage (14) et dispositif de fixation (16) selon la revendication 1, **caractérisés en ce que** le corps de base (42) fournit une section de réception de mandrin (36) et le mandrin de serrage pénètre au moins en partie dans la section de réception de mandrin de serrage (36), où le coulisseau de serrage (66) vient en prise, dans une position de verrouillage éloignée de la position de libération, dans la section de réception de mandrin (36) pour verrouiller le mandrin de serrage (14) avec le dispositif de fixation (16).

3. Mandrin de serrage (14) et dispositif de fixation (16) selon la revendication 2, **caractérisés en ce que** la section de réception de mandrin (36) est en forme d'anneau et **en ce que** le mandrin de serrage (14) présente une bague de serrage (34) pour une insertion dans la section de réception de mandrin de serrage (36).

4. Mandrin de serrage (14) et dispositif de fixation (16) selon la revendication 1, 2 ou 3, **caractérisés en ce que** le corps de base (42) fournit des moyens de centrage (33) pour centrer le mandrin de serrage (14) sur le dispositif de fixation (16).

5. Mandrin de serrage (14) et dispositif de fixation (16) selon l'une des revendications précédentes, **caractérisé en ce que** des moyens de commande (48) couplé de manière mobile et déplaçables tangentiellement par rapport à l'élément rotatif (46) sont prévus pour faire tourner l'élément rotatif (46).

6. Mandrin de serrage (14) et dispositif de fixation (16) selon la revendication 4, **caractérisés en ce que** les moyens de commande (48) présentent un alésage de broche (54) et **en ce qu'**une vis de réglage (50) est prévue, par l'intermédiaire de laquelle les moyens de commande (48) peuvent être déplacés.

7. Mandrin de serrage (14) et dispositif de fixation (16) selon l'une des revendications précédentes, **caractérisés en ce que** l'élément rotatif (46) comprend des courbes de commande (68) ou des cames de commande (72) et **en ce que** le coulisseau de serrage (66) présentent des courbes de commande (68) ou des cames de commande (72) qui correspondent avec des cames de commande (72) ou des courbes de commande (68).

8. Mandrin de serrage (14) et dispositif de fixation (16) selon l'une des revendications précédentes, **caractérisés en ce que** la section (78) du coulisseau de serrage (66) qui vient en prise dans la section de réception de mandrin (36) présente des chanfreins d'entrée (79) par l'intermédiaire desquels le mandrin de serrage (14), via un déplacement du coulisseau de serrage (66) dans la position de verrouillage, sollicite le mandrin de serrage (14) contre le dispositif de fixation (16).

9. Mandrin de serrage (14) et dispositif de fixation (16) selon l'une des revendications précédentes, **caractérisés en ce que** le corps de base (42) présente des moyens de centrage (30) pour centrer le dispositif de fixation (16) sur la broche rotative (12).

10. Système de fixation (10), comprenant un mandrin de serrage (14) et un dispositif de fixation (16) selon l'une des revendications précédentes, une broche rotative (12) et le tube de traction (18), dans lequel des sections de couplage (82) qui peuvent être actionnées sur l'adaptateur de traction (20) ou sur le tube de traction (18) avec les coulisseaux de serrage (66) et des contre-sections (80) qui interagissent avec les sections de couplage (82) sont prévues sur le tube de traction (18) ou sur l'adaptateur de traction (20).

11. Système de fixation (10) selon la revendication 10, **caractérisé en ce que** les sections de couplage (82) sont réalisées sous la forme de sections en tenon (82) qui sont formées d'un seul tenant avec l'adaptateur de traction (20) ou le tube de traction (18) et sont formées flexibles de manière élastique dans la direction radiale.

12. Système de fixation (10) selon la revendication 10 ou 11, **caractérisé en ce que** les sections de couplages présentent des pattes (84) qui font saillie dans la direction radiale et qui coopèrent avec des contre-sections (80) réalisées sous forme d'évidements de rainure.

13. Système de fixation (10) selon l'une des revendications 10 à 12, **caractérisé en ce que** les coulisseaux de serrage (66) sont conçus de telle sorte qu'ils actionnent chacun une pluralité de sections en tenon (82).
